# EUROPÄISCHE PATENTANMELDUNG

(11) **EP 2 665 114 A1**
(43) Veröffentlichungstag der Anmeldung: **20.11.2013**
(21) Anmeldenummer: 12167807.2
(22) Anmeldetag: 14.05.2012
(51) Int. Cl.: H01M 4/525, C01B 25/37, H01M 4/52, H01M 4/58

(54) **Verfahren zur Herstellung von Elektrodenmaterialien**

(71) Anmelder: BASF SE, 67056 Ludwigshafen (DE)
(72) Erfinder: Ewald, Bastian, Dr., 67061 Ludwigshafen (DE); Krkljus, Ivana, Dr., 67063 Ludwigshafen (DE); Lampert, Jordan Keith, Dr., 67063 Ludwigshafen (DE)
(74) Vertreter: Süling, Carsten

(57) **Zusammenfassung**

Die vorliegende Erfindung betrifft in Verfahren zur Herstellung von Elektrodenmaterialien, dadurch gekennzeichnet, dass es die folgenden Schritte beinhaltet:
(a) man vermischt miteinander:
(A) mindestens eine Phosphorverbindung,
(B) mindestens eine Lithiumverbindung,
(C) mindestens eine Kohlenstoffquelle,
(D1) mindestens eine wasserlösliche Eisenverbindung, in der Fe in der Oxidationsstufe +2 oder +3 vorliegt,
(D2) mindestens eine Eisenquelle, die von (D1) verschieden und wasserunlöslich ist und in der Fe in der Oxidationsstufe null, +2 oder +3 vorliegt,

(b) man behandelt die erhaltene Mischung thermisch.

## Beschreibung

Die vorliegende Erfindung betrifft in Verfahren zur Herstellung von Elektrodenmaterialien, dadurch gekennzeichnet, dass es die folgenden Schritte beinhaltet:
(a) man vermischt miteinander:
   (A) mindestens eine Phosphorverbindung,
   (B) mindestens eine Lithiumverbindung,
   (C) mindestens eine Kohlenstoffquelle,
   (D1) mindestens eine wasserlösliche Eisenverbindung, in der Fe in der Oxidationsstufe +2 oder +3 vorliegt,
   (D2) mindestens eine Eisenquelle, die von (D1) verschieden und wasserunlöslich ist und in der Fe in der Oxidationsstufe null, +2 oder +3 vorliegt,
(b) man behandelt die erhaltene Mischung thermisch.

Weiterhin betrifft die vorliegende Erfindung Elektrodenmaterialien und deren Verwendung.

Auf der Suche nach vorteilhaften Elektrodenmaterialien für Batterien, die als leitfähige Spezies Lithium-Ionen nutzen, wurden bisher zahlreiche Materialien vorgeschlagen, beispielsweise Lithium-haltige Spinelle, Mischoxide mit Schichtstruktur wie beispielsweise lithiierte Nickel-Mangan-Kobalt-Oxide und Lithium-Eisen-Phosphate.

Lithium-Eisen-Phosphate sind deshalb von besonderem Interesse, weil sie keine toxischen Schwermetalle enthalten und in vielen Fällen sehr robust gegen Oxidation und Wasser sind. Nachteilig bei Lithium-Eisen-Phosphaten kann die vergleichsweise geringe Energiedichte sein.

Ein Problem besteht darin, dass vielfach gewünscht wird, dass Batterien auf der Basis von Lithiumeisenphosphaten in einigen Anwendungsformen, in denen eine hohe Spitzenleistung gefordert wird, beispielsweise für Akkubohrschrauber, mit denen man in Beton bohren und schrauben möchte, unbefriedigend sind. Weitere Beispiele sind Anlasser für Kraftfahrzeuge und Krafträder. Als problematisch wird dabei gesehen, dass die gewünschte schnelle Entladung bei Lithium-Ionen-Batterien auf Basis von Lithiumeisenphosphaten eine derartige schnelle Entladung nicht leistet.

Es bestand also die Aufgabe, elektrochemische Zellen bereit zu stellen, die toxikologisch möglichst wenig bedenkliche Elektrodenmaterialien enthalten und die eine schnelle Entladung, also eine hohe Spitzenleistung aufweisen. Weiterhin bestand die Aufgabe, ein Verfahren bereit zu stellen, nach dem man Elektrodenmaterialien herstellen kann, und die eine schnelle Entladung, also eine hohe Spitzenleistung, der korrespondierenden Batterien ermöglichen.

Dementsprechend wurde das eingangs definierte Verfahren gefunden, im Folgenden auch als erfindungsgemäßes Verfahren bezeichnet.

Zur Durchführung des erfindungsgemäßen Verfahrens vermischt man in Stufe (a) mehrere der Ausgangsmaterialien, vorzugsweise alle beteiligten Ausgangsmaterialien, in mehreren oder vorzugsweise in einem Schritt. Als Gefäße für das Vermischen sind beispielsweise Rührkessel und gerührte Kolben geeignet.

Im Folgenden werden die Ausgangsmaterialien weiter charakterisiert.

Als Ausgangsmaterial (A) wählt man mindestens eine Phosphorverbindung, im Folgenden auch Phosphorverbindung (A) genannt, gewählt aus Phosphorwasserstoffen und Verbindungen, in denen Phosphor in der Oxidationsstufe +1 oder +3 oder +5 vorliegt, beispielsweise Phosphanen mit mindestens einer Alkylgruppe oder mindestens einer Alkoxygruppe pro Molekül, Phosphorhalogeniden, Phosphonsäure, hypophosphoriger Säure und Phosphorsäure. Bevorzugte Phosphane sind solche der allgemeinen Formel (I)

P(R¹)ᵣ(X¹)ₛHₜ (I)

wobei die Variablen wie folgt gewählt sind:
- R¹: kann verschieden sein oder gleich und ist gewählt aus Phenyl und vorzugsweise C₁-C₁₀-Alkyl, cyclisch oder linear, beispielsweise Methyl, Ethyl, n-Propyl, iso-Propyl, n-Butyl, iso-Butyl, sec.-Butyl, tert.-Butyl, n-Pentyl, Cyclopentyl, iso-Amyl, iso-Pentyl, n-Hexyl, isoHexyl, Cyclohexyl, und 1,-3-Dimethylbutyl, bevorzugt n-C₁-C₆-Alkyl, besonders bevorzugt Methyl, Ethyl, n-Propyl, iso-Propyl und ganz besonders bevorzugt Methyl oder Ethyl. Wenn ein Stoff mehrere Alkoxygruppen pro Mol aufweist, so kann R¹ verschieden sein oder vorzugsweise gleich und gewählt aus den vorstehend genannten C₁-C₆-Alkylresten.
- X¹: kann verschieden sein oder gleich und wird gewählt aus Halogen, Hydroxylgruppen, Phenoxygruppen und Alkoxygruppen, bevorzugt der Formel OR¹, insbesondere Methoxy und Ethoxy, und wobei Halogen bevorzugt Brom und besonders bevorzugt Chlor ist,
- r, s: sind gewählt aus ganzen Zahlen im Bereich von null bis drei,
- t: ist gewählt aus ganzen Zahlen im Bereich von null bis zwei,
wobei die Summe r + s + t = 3, und wobei
mindestens eine der Ungleichungen
r ≠ 0
s ≠ 0
erfüllt ist.

In einer Ausführungsform der vorliegenden Erfindung wählt man Phosphorverbindung (A) aus Verbindungen der allgemeinen Formel P(OR¹)₃, wobei R¹ verschieden oder vorzugsweise gleich sein kann und gewählt aus Phenyl und C₁-C₁₀-Alkyl, besonders bevorzugt sind P(OCH₃)₃ und P(OC₂H₅)₃.

In einer Ausführungsform der vorliegenden Erfindung wählt man Phosphorverbindung (A) aus Verbindungen der allgemeinen Formel O=P(OR¹)₃, wobei R¹ verschieden oder vorzugsweise gleich sein kann und gewählt aus Phenyl und C₁-C₁₀-Alkyl, besonders bevorzugt sind O=P(OCH₃)₃ und O=P(OC₂H₅)₃.

In einer Ausführungsform der vorliegenden Erfindung wählt man Phosphorverbindung (A) aus Verbindungen der allgemeinen Formel O=P(R¹)₃, wobei R¹ verschieden oder vorzugsweise gleich sein kann und gewählt aus Phenyl und C₁-C₁₀-Alkyl, besonders bevorzugt sind O=P(C₆H₅)₃, O=P(CH₂)₃ und O=P(C₂H₅)₃.

Als Phosphonsäure, hypophosphorige Säure und Phosphorsäure kann man jeweils die freie Säure oder korrespondierende Salze wählen, insbesondere Lithium- und Ammoniumsalze. Als Phosphorsäure und Phosphonsäure kann man jeweils die einkernigen Säuren H₃PO₃ bzw. H₃PO₄ wählen, weiterhin aber auch zwei-, drei- oder mehrkernige Säuren, beispielsweise H₄P₂O₇ oder Polyphosphorsäure. In einer anderen Variante wählt man eine gemischt kondensierte Verbindung, beispielsweise erhältlich durch Kondensation von Phosphorsäure mit Phosphoriger Säure.

In einer Ausführungsform der vorliegenden Erfindung wählt man als Ausgangsmaterial (A) zwei oder mehr Phosphorverbindungen (A). In einer anderen Ausführungsform der vorliegenden Erfindung wählt man genau eine Phosphorverbindung (A).

Als Ausgangsmaterial (B) wählt man mindestens eine Lithiumverbindung, auch Lithiumverbindung (B) genannt, vorzugsweise mindestens eine anorganische Lithiumverbindung. Beispiele für geeignete anorganische Lithiumverbindungen sind Lithiumhalogenide, beispielsweise Lithiumchlorid, weiterhin Lithiumsulfat, Lithiumacetat, LiOH, Li₂CO₃, Li₂O und LiNO₃; bevorzugt sind Li₂SO₄, LiOH, Li₂CO₃, Li₂O und LiNO₃. Dabei kann Lithiumverbindung Kristallwasser enthalten, beispielsweise LiOH · H₂O.

In einer speziellen Ausführungsform der vorliegenden Erfindung wählt man als Phosphorverbindung (A) und Lithiumverbindung (B) jeweils LiH₂PO₂, Lithiumphosphat, Lithiumorthophosphat, Lithiummetaphosphat, Lithiumphosphonat, Lithiumphosphit, Lithiumhydrogenphoshat oder Lithiumdihydrogenphosphat, d.h., Lithiumphosphat, Lithiumphosphonat, Lithiumphosphit oder Lithium(di)hydrogenphosphat können jeweils gleichzeitig als Phosphorverbindung (A) und als Lithiumverbindung (B) dienen.

Als Ausgangsmaterial (C) wählt man mindestens eine Kohlenstoffquelle, kurz auch Kohlenstoffquelle (C) genannt, die eine separate Kohlenstoffquelle oder gleich mindestens einer Phosphorverbindung (A) oder Lithiumverbindung (B) sein kann.

Unter einer separaten Kohlenstoffquelle (C) soll im Rahmen dieser Erfindung verstanden werden, dass ein weiteres Ausgangsmaterial eingesetzt wird, das gewählt wird aus elementarem Kohlenstoff in einer Modifikation, die den elektrischen Strom leitet, oder eine Verbindung, die im Rahmen der thermischen Behandlung in Schritt (b) zu Kohlenstoff zersetzt wird und die von Phosphorverbindung (A) und Lithiumverbindung (B) verschieden ist.

Als Kohlenstoffquelle (C) ist beispielsweise Kohlenstoff in einer Modifikation, die den elektrischen Strom leitet, geeignet, also beispielsweise Ruß, Graphit, Graphen, Kohlenstoff-Nanoröhren oder Aktivkohle.

Beispiele für Graphit sind nicht nur mineralischer und synthetischer Graphit, sondern auch expandierte Graphite und interkalierter Graphit.

Ruß kann beispielsweise gewählt werden aus Lampenruß, Ofenruß, Flammruß, Thermalruß, Acetylenruß, Industrieruß und Furnace Ruß. Ruß kann Verunreinigungen enthalten, beispielsweise Kohlenwasserstoffe, insbesondere aromatische Kohlenwasserstoffe, oder Sauerstoff-haltige Verbindungen bzw. Sauerstoff-haltige Gruppen wie beispielsweise OH-Gruppen. Weiterhin sind Schwefel- oder Eisen-haltige Verunreinigungen in Ruß möglich. In einer weiteren Variante setzt man modifizierte Ruße oder modifizierte Graphite ein, beispielsweise solche Ruße oder Graphite, die Hydroxylgruppen, Epoxygruppen, Ketogruppen oder Carboxylgruppen aufweisen.

Als Kohlenstoffquelle (C) sind weiterhin Verbindungen von Kohlenstoff geeignet, die bei der thermischen Behandlung in Schritt (c) zu Kohlenstoff zersetzt werden. Beispielsweise sind synthetische und natürliche Polymere, unmodifiziert oder modifiziert, geeignet. Beispiele für synthetische Polymere sind Polyolefine, beispielsweise Polyethylen und Polypropylen, weiterhin Polyacrylnitril, Polybutadien, Polystyrol, und Copolymeren von mindestens zwei Comonomeren, gewählt aus Ethylen, Propylen, Styrol, (Meth)acrylnitril und 1,3-Butadien. Weiterhin sind Polyisopren und Polyacrylate geeignet. Besonders bevorzugt ist Polyacrylnitril.

Unter Polyacrylnitril werden im Rahmen der vorliegenden Erfindung nicht nur Polyacrylnitril-Homopolymere verstanden, sondern auch Copolymere von Acrylnitril mit 1,3-Butadien oder Styrol. Bevorzugt sind Polyacrylnitril-Homopolymere.

Im Rahmen der vorliegenden Erfindung wird unter Polyethylen nicht nur Homo-Polyethylen verstanden, sondern auch Copolymere des Ethylens, die mindestens 50 mol-% Ethylen einpolymerisiert enthalten und bis zu 50 mol-% von mindestens einem weiteren Comonomer, beispielsweise α-Olefine wie Propylen, Butylen (1-Buten), 1-Hexen, 1-Octen, 1-Decen, 1-Dodecen, 1-Penten, weiterhin Isobuten, Vinylaromaten wie beispielsweise Styrol, weiterhin (Meth)acrylsäure, Vinylacetat, Vinylpropionat, C₁-C₁₀-Alkylester der (Meth)acrylsäure, insbesondere Methylacrylat, Methylmethacrylat, Ethylacrylat, Ethylmethacrylat, n-Butylacrylat, 2-Ethylhexylacrylat, n-Butylmethacrylat, 2-Ethylhexylmethacrylat, weiterhin Maleinsäure, Maleinsäureanhydrid und Itaconsäureanhydrid. Bei Polyethylen kann es sich um HDPE oder um LDPE handeln.

Im Rahmen der vorliegenden Erfindung wird unter Polypropylen nicht nur Homo-Polypropylen verstanden, sondern auch Copolymere des Propylens, die mindestens 50 mol-% Propylen einpolymerisiert enthalten und bis zu 50 mol-% von mindestens einem weiteren Comonomer, beispielsweise Ethylen und α-Olefine wie Butylen, 1-Hexen, 1-Octen, 1-Decen, 1-Dodecen und 1-Penten. Bei Polypropylen handelt es sich vorzugsweise um isotaktisches oder um im Wesentlichen isotaktisches Polypropylen.

Im Rahmen der vorliegenden Erfindung werden unter Polystyrol nicht nur Homopolymere des Styrols verstanden, sondern auch Copolymere mit Acrylnitril, 1,3-Butadien, (Meth)acrylsäure, C₁-C₁₀-Alkylester der (Meth)acrylsäure, Divinylbenzol, insbesondere 1,3-Divinylbenzol, 1,2-Diphenylethylen und α-Methylstyrol.

Ein weiteres geeignetes synthetisches Polymer ist Polyvinylalkohol.

Als Kohlenstoffquelle (C) geeignete natürliche Polymere sind beispielsweise Stärke, Zellulose, Alginate, (z. B. Agar-Agar, weiterhin Pektine, Gummi arabicum, Oligo-und Polysaccharide, Guarkernmehl und Johannisbrotkernmehl sowie Amylose und Amylopektin geeignet.

Geeignet sind auch modifizierte natürliche Polymere. Darunter seien durch polymeranaloge Umsetzung modifizierte natürliche Polymere verstanden. Geeignete polymeranaloge Umsetzungen sind insbesondere die Veresterung und die Veretherung. Bevorzugte Beispiele für modifizierte natürliche Polymere sind mit Methanol veretherte Stärke, acetylierte Stärke und Acetylcellulose, weiterhin phosphatierte und sulfatierte Stärke.

Weiterhin sind als Kohlenstoffquelle (C) Carbide geeignet, bevorzugt kovalente Carbide, beispielsweise Eisencarbid Fe₃C.

Weiterhin sind schwerflüchtige niedermolekulare organische Verbindungen als Kohlenstoffquelle (C) geeignet. Geeignet sind insbesondere solche Verbindungen, die bei Temperaturen im Bereich von 350 bis 1200°C nicht verdampfen, sondern sich zersetzen, beispielsweise als Feststoff oder in der Schmelze. Beispiele sind Dicarbonsäuren, beispielsweise Phthalsäure, Phthalsäureanydrid, Isophthalsäure, Terephthalsäure, Weinsäure, Zitronensäure, Brenztraubensäure, weiterhin Zucker, beispielsweise Monosaccharide mit 3 bis 7 Kohlenstoffatomen pro Molekül (Triosen, Tetrosen, Pentosen, Hexosen, Heptosen) und Kondensate von Monosacchariden wie beispielsweise Di-, Tri-, und Oligosaccharide, insbesondere Laktose, Glucose und Fructose, außerdem Zuckeralkohole und Zuckersäuren, beispielsweise Aldonsäuren, Ketoaldonsäuren, Uronsäuren und Aldarsäuren, insbesondere Galactonsäure.

Weitere Beispiele für niedermolekulare organische Verbindungen als Kohlenstoffquelle (C) sind Harnstoff sowie seine schwerer flüchtigen Kondensate Biuret, Melamin, Melam (N2-(4,6-diamino-1,3,5-triazin-2-yl)-1,3,5-triazin-2,4,6-triamin) und Melem (1,3,4,6,7,9,9b-Heptaazaphenalen-2,5,8-triamin).

Weitere Beispiele für Kohlenstoffquellen (C) sind Salze, bevorzugt Eisen-, Ammoniumsalze und Alkalimetallsalze, besonders bevorzugt Eisen-, Natrium-, Kalium-, Ammonium- oder Lithiumsalze, von organischen Säuren, beispielsweise Alkanoate, insbesondere Acetate, Propionate, Butyrate, weiterhin Lactate, Citrate, Tartrate und Benzoate. Besonders bevorzugte Beispiele sind Ammoniumacetat, Kaliumammoniumtartrat, Kaliumhydrogentartrat, Kaliumnatriumtartrat, Natriumtartrat (Dinatriumtartrat), Natriumhydrogentartrat, Lithiumhydrogentatrat, Lithiumammoniumtatrat, Lithiumtartrat, Lithiumcitrat, Kaliumcitrat, Natriumcitrat, Eisenacetat, Lithiumacetat, Natriumacetat, Kaliumacetat, Lithiumlactat, Ammoniumlactat, Natriumlactat und Kaliumlactat.

In einer speziellen Ausführungsform der vorliegenden Erfindung wählt man als Kohlenstoffquelle (C) und Phosphorverbindung (A) eine organische Phosphorverbindung, genannt seien beispielsweise Phosphorsäuretrimethylester, Phosphorsäuretriethylester, Triphenylphosphan und Triphenylphosphinoxid (C₆H₅)₃PO.

In einer speziellen Ausführungsform der vorliegenden Verbindung wählt man als Kohlenstoffquelle (C) und Lithiumverbindung (B) jeweils Lithiumacetat, Lithiumlactat oder Lithiumhydrogentartrat, d.h. Lithiumverbindung (B) Lithiumacetat, Lithiumlactat bzw. Lithiumhydrogentartrat können jeweils gleichzeitig als Kohlenstoffquelle (C) dienen.

In einer Ausführungsform der vorliegenden Erfindung wählt man zwei oder mehr verschiedene Kohlenstoffquellen, beispielsweise zwei verschiedene Kohlenstoffquellen oder drei verschiedene Kohlenstoffquellen. In einer anderen Ausführungsform der vorliegenden Erfindung wählt man genau eine Kohlenstoffquelle (C).

Als Ausgangsmaterial (D) wählt man mindestens zwei Eisenverbindungen oder Eisen und mindestens eine Eisenverbindung (D1). Dabei wählt man
(D1) mindestens eine wasserlösliche Eisenverbindung, in der Fe in der Oxidationsstufe +2 oder +3 vorliegt, kurz auch als "Eisenverbindung (D1)" oder "Komponente (D1)" bezeichnet, und
(D2) mindestens eine Eisenquelle, die von (D1) verschieden und wasserunlöslich ist und in der Fe in der Oxidationsstufe null, +2 oder +3 vorliegt.

Beispielsweise kann man als Eisenquelle (D2) Eisen oder vorzugsweise mindestens eine wasserunlösliche Eisenverbindung wählen, in der Fe in der Oxidationsstufe null, +2 oder +3 vorliegt, kurz auch als "Eisenverbindung (D2)" oder "Komponente (D2)" bezeichnet.

Dabei bedeutet "in der Oxidationsstufe +2 oder +3" die Oxidationsstufe, in der Fe in der betreffenden Eisenverbindung (D1) bzw. Eisenverbindung (D2) zu Beginn des Vermischens nach Schritt (a) vorliegt.

Unter "wasserlöslich" wird im Zusammenhang mit Eisenverbindung (D1) verstanden, dass die Löslichkeit in voll entsalztem Wasser bei einem pH-Wert von 7 und 20°C mindestens 0,1 g Felonen/I beträgt, bevorzugt im Bereich von 1 bis 500 g/l.

Unter "wasserunlöslich" wird im Zusammenhang mit Eisenverbindung (D2) verstanden, dass die Löslichkeit in voll entsalztem Wasser bei einem pH-Wert von 7 und 20°C weniger als 0,1 g Felonen/I beträgt, beispielsweise 10⁻¹⁰ bis 0,01 g/l.

Bei Eisenverbindung (D1) und bei Eisenverbindung (D2) handelt es sich vorzugsweise um anorganische Eisenverbindungen.

Dabei kann man Eisenverbindung (D1) aus wasserfreien und wasserhaltigen Eisenverbindungen wählen, beispielsweise den Hydraten. Dabei sollen unter Hydraten nicht nur Monohydrate, sondern auch andere Hydrate verstanden werden, beispielsweise im Falle des Eisen(II)oxalat auch das Dihydrat, im Falle des Eisen(II)chlorids auch das Tetrahydrat und im Falle des Eisen(III)nitrats auch das Nonahydrat.

In einer Ausführungsform der vorliegenden Erfindung wählt man wasserlösliche Eisenverbindung (D1) aus Ammoniumeisen(II)sulfat, Ammoniumeisen(III)sulfat" Ammoniumeisen(II)citrat, Ammoniumeisen(III)citrat, Eisen(II)bromid, Eisen(III)bromid, Eisen(II)fluorid, Eisen(III)fluorid, Eisen(II)ethoxid, Eisen(II)gluconat, Eisen(II)nitrat, Eisen(III)nitrat, Eisen(II)acetat, FeSO₄, Fe₂(SO₄)₃, Eisen(II)oxalat, Eisen(II)citrat, Eisen(III)citrat, Eisen(III)acetylacetonat, Eisen(II)lactat, Eisen(III)lactat und Eisenchlorid, beispielsweise FeCl₂ und wasserhaltigem Eisen(III)chlorid.

In einer Ausführungsform der vorliegenden Erfindung wählt man wasserunlösliche Eisenverbindung (D2) aus Fe(OH)₃, FeOOH, Fe₂O₃-aq, FeO, Fe₂O₃, Fe₃O₄, FeS, Eisen(II)phosphat (Fe₃(PO₄)₂), Eisen(III)phosphat (FePO₄), Eisen(II)pyrophosphat, Eisen(III)pyrophosphat, Eisencarbid, Eisenphosphid, Eisen(II)phosphonat, Eisen(III)phosphonat, und Eisencarbonat, bevorzugt sind Fe(OH)₃, FeOOH, Fe₂O₃, Fe₃O₄, Eisenphosphat und Eisen(II)carbonat.

Dabei kann man Eisenverbindung (D1) und (D2) jeweils aus wasserfreien und wasserhaltigen Eisenverbindungen wählen, beispielsweise den Hydraten. Dabei sollen unter Hydraten nicht nur Monohydrate, sondern auch andere Hydrate verstanden werden, beispielsweise im Falle des Eisen(II)phosphats auch das Octahydrat.

In einer Ausführungsform der vorliegenden Erfindung wählt man wasserunlösliche Eisenverbindung (D2) aus Eisenpentacarbonyl.

Ausgangsmaterial (D1) kann man beispielsweise als wässrige Lösung oder als Pulver einsetzen, beispielsweise mit mittleren Partikeldurchmessern (D50) im Bereich von 10 bis 750 nm, bevorzugt im Bereich von 25 bis 500 nm. Ausgangsmaterial (D2) kann man beispielsweise als wässrige Suspension oder als Pulver einsetzen, beispielsweise mit mittleren Primärpartikeldurchmessern (D50) im Bereich von 10 bis 750 nm, bevorzugt im Bereich von 25 bis 500 nm.

In einer Ausführungsform der vorliegenden Erfindung kann Ausgangsmaterial (D2) in Form von Agglomeraten vorliegen.

In einer speziellen Ausführungsform der vorliegenden Erfindung wählt man als Kohlenstoffquelle (C) und Eisenverbindung (D1) jeweils Eisenacetat, Eisencitrat, Eisengluconat, Eisenethoxid, oder Ammoniumeisencitrat, d.h. die Eisenverbindung (D1) Eisen(II)acetat, Eisen(II)acetylacetonat, Eisen(II)citrat, Eisen(II)lactat, Eisen(III)lactat, Ammoniumeisen(II)citrat, Eisen(III)acetat, Eisen(III)acetylacetonat, Eisen(III)citrat bzw. Ammoniumeisen(III)citrat kann gleichzeitig als Kohlenstoffquelle (C) dienen.

In einer speziellen Ausführungsform der vorliegenden Erfindung wählt man als Kohlenstoffquelle (C) und Eisenverbindung (D2) jeweils Eisencarbid.

In einer speziellen Ausführungsform der vorliegenden Erfindung wählt man als Eisenverbindung (D1), Kohlenstoffquelle (C) und Lithiumverbindung (B) Lithiumeisencitrat, d.h. Lithiumeisencitrat kann jeweils gleichzeitig als Eisenverbindung (D1), Kohlenstoffquelle (C) und als Lithiumverbindung (B) dienen.

In einer Ausführungsform der vorliegenden Erfindung wählt man Eisenverbindung (D1) und Eisenverbindung (D2) in einem Molverhältnis von 1 : 1 bis 1: 9, bevorzugt bis 15 : 85, wobei das Molverhältnis auf Fe in Eisenverbindung (D1) bzw. Eisenverbindung (D2) (bzw. elementares Eisen) bezogen ist.

In einer Ausführungsform der vorliegenden Erfindung setzt man eine Eisenverbindung (D1) und zwei Eisenverbindungen (D2) ein. In einer anderen Ausführungsform der vorliegenden Erfindung setzt man eine Eisenverbindung (D2) und zwei Eisenverbindungen (D1) ein.

In einer Ausführungsform der vorliegenden Erfindung setzt man zwei Phosphorverbindungen (A), eine Lithiumverbindung (B), eine Kohlenstoffquelle (C), eine Eisenverbindung (D1) und eine Eisenverbindung (D2) ein.

In einer bevorzugten Ausführungsform der vorliegenden Erfindung setzt man zwei Phosphorverbindungen (A), eine Lithiumverbindung (B), zwei Kohlenstoffquellen (C), eine Eisenverbindung (D1) und eine Eisenverbindung (D2) ein.

In einer bevorzugten Ausführungsform der vorliegenden Erfindung setzt man zwei Phosphorverbindungen (A), eine Lithiumverbindung (B), zwei Kohlenstoffquellen (C), eine Eisenverbindung (D1) und eine Eisenverbindung (D2) ein, wobei Eisenverbindung (D1) ein Salz einer organischen Verbindung ist und als eine der Kohlenstoffquellen (C) dient.

In einer Ausführungsform der vorliegenden Erfindung kann man in Schritt (a) eine oder mehrere reduzierende Verbindungen einsetzen, beispielsweise kann man ein oder mehrere Reduktionsmittel (E) einsetzen. Diese Ausführungsform ist dann bevorzugt, wenn man mindestens eine Eisenverbindung (D1) oder (D2) einsetzt, in der Fe in der Oxidationsstufe +3 vorliegt. Als reduzierende Verbindungen sind beispielsweise solche Phosphorverbindungen (A) geeignet, in denen P in der Oxidationsstufe +3 oder +1 vorliegt, insbesondere Phosphorige Säure (H₃PO₃), Hypophosphorige Säure (H₂PO₂) und ihre jeweiligen Ammonium- und Lithiumsalze sowie Ester, beispielsweise C₁-C₁₀-Alkylester. Als Reduktionsmittel (E) ist weiterhin elementares Eisen geeignet.

Als Reduktionsmittel (E) kann man gasförmige, flüssige oder feste Substanzen einsetzen, die unter den Bedingungen von Schritt (a) oder (b) Eisen, soweit erforderlich, in die Oxidationsstufe +2 überführen.

In einer Ausführungsform der vorliegenden Erfindung wählt man als festes Reduktionsmittel (E) ein Metall, beispielsweise Nickel oder Mangan, oder ein Metallhydrid.

Als gasförmige Reduktionsmittel (E) kann man beispielsweise Wasserstoff, Kohlenmonoxid, Ammoniak und/oder Methan einsetzen. Wenn man ein oder mehrere gasförmige Reduktionsmittel (E) einzusetzen wünscht, so ist es bevorzugt, das oder die gasförmigen Reduktionsmittel (E) in Schritt (b) einzusetzen, der unten weiter erläutert wird.

Weitere geeignete Reduktionsmittel (E) sind metallisches Eisen und Eisenpentacarbonyl.

In einer anderen Ausführungsform der vorliegenden Erfindung setzt man keine Reduktionsmittel (E) ein.

In einer Ausführungsform der vorliegenden Erfindung wählt man in Schritt (a) die Mengenverhältnisse von Eisenverbindungen (D1 und (D2), an Phosphorverbindung(en) (A) und Lithiumverbindung(en) (B) so, dass die gewünschte Stöchiometrie einer Eisenverbindung erfüllt ist, die man als Elektrodenmaterial einzusetzen gedenkt. So kann man in Schritt (a) die Mengenverhältnisse von Eisenverbindungen (D1 und (D2), an Phosphorverbindung(en) (A) und Lithiumverbindung(en) (B) so wählen, dass die Stöchiometrie beispielsweise Li₃Fe₂(PO₄)₃, Li₂Fe₂(PO₄)₂, Li₄Fe(PO₄)₂ oder Li₂FeP₂O₇ oder insbesondere LiFePO₄ ergibt.

Als Ausgangsmaterial (F) kann man mindestens eine weitere Metallverbindung einsetzen, in der das oder die Metalle von Eisen verschieden sind, kurz auch Metallverbindung (F) genannt. Dabei wird als Metall vorzugsweise ein oder mehrere Metalle aus der ersten Periode der Übergangsmetalle gewählt. Besonders bevorzugt wählt man Metallverbindung (F) aus Verbindungen von Ti, V, Cr, Mn, Co, Ni, Mg, Al, Nb, W, Mo, Cu und Zn, insbesondere aus Verbindungen von Sc, Ti, V, Mn, Ni und Co. Ganz besonders bevorzugt wählt man Metallverbindung (F) aus Oxiden, Hydroxiden, Carbonaten und Sulfaten von Metallen der ersten Periode der Übergangsmetalle.

Metallverbindung (F) kann wasserfrei oder wasserhaltig sein. Metallkation in Metallverbindung (F) kann in komplexierter Form vorliegen, beispielsweise als Hydratkomplex, oder unkomplexiert sein.

Bei Metallverbindung (F) kann es sich um ein Salz handeln, beispielsweise Halogenid, insbesondere Chlorid, weiterhin Nitrat, Carbonat, Sulfat, Oxid, Hydroxid, Acetat, Citrat, Tartrat, Oxalat oder Acetylacetonat, oder um Salze mit verschiedenen Anionen. Vorzugsweise werden Salze gewählt aus Oxiden, Carbonaten, Hydroxiden und Nitraten, basisch oder neutral. Ganz besonders bevorzugte Beispiele für Metallverbindungen (F) sind Oxide, Hydroxide, Carbonate und Sulfate.

In einer anderen Ausführungsform der vorliegenden Erfindung wählt man Metallverbindung (F) aus Fluoriden, beispielsweise als Alkalimetallfluorid, insbesondere Natriumfluorid.

In einer Ausführungsform der vorliegenden Erfindung kann Metallverbindung (F) als eine oder die einzige Kohlenstoffquelle (C) wirken, beispielhaft seien Nickelacetat, Kobaltacetat, Zinkacetat und Mangan(II)acetat genannt.

In einer Ausführungsform der vorliegenden Erfindung kann Metallverbindung (F) als ein oder das einzige Reduktionsmittel (E) wirken. Beispielhaft seien Mangan(II)acetat, MnCO₃, MnSO₄, Nickellactat, Manganhydrid, Nickelhydrid, Nickelsuboxid, Nickelcarbid, Mangancarbid und Mangan(II)lactat genannt.

In einer Ausführungsform der vorliegenden Erfindung kann man in Schritt (a) ein oder mehrere Lösungsmittel zusetzen, beispielsweise ein oder mehrere organische Lösungsmittel (G) und/oder Wasser. Dabei sollen unter organischen Lösungsmitteln solche Stoffe verstanden werden, die bei der Temperatur von Schritt (a) des erfindungsgemäßen Verfahrens flüssig sind und die mindestens eine C-H-Bindung pro Molekül aufweisen.

In einer Variante setzt man Wasser und ein organisches Lösungsmittel (G) zu. Beispiele für geeignete organische Lösungsmittel sind insbesondere halogenfreie organische Lösungsmittel (G) wie Methanol, Ethanol, Isopropanol oder n-Hexan, Cyclohexan, Aceton, Ethylacetat, Diethylether und Diisopropylether.

Bevorzugtes Lösungsmittel ist Wasser. Besonders bevorzugt ist, in Schritt (a) Wasser, aber keine organischen Lösungsmittel (G) einzusetzen.

Ohne dass einer bestimmten Theorie der Vorzug gegeben werden soll, ist es möglich, dass gewisse organische Lösungsmittel (G) wie sekundäre oder primäre Alkanole auch als Reduktionsmittel (E) wirken können.

Das Vermischen in Schritt (a) kann man beispielsweise Verrühren von einer oder mehreren Suspensionen der Ausgangsmaterialen (A) bis (D2) und gegebenenfalls (E), (F) und (G) durchführen. In anderen Ausführungsformen vermischt man die Ausgangsmaterialen (A) bis (D) und gegebenenfalls (E) und (F) als Feststoffe miteinander innig. In einer anderen Ausführungsform der vorliegenden Erfindung kann man die Ausgangsmaterialen (A) bis (D2) und gegebenenfalls (E) und (F) und (G) miteinander zu einer Paste verkneten.

In einer Ausführungsform der vorliegenden Erfindung führt man das Vermischen in Schritt (a) bei Temperaturen im Bereich von null bis 200°C durch, bevorzugt führt man es bei Temperaturen im Bereich der Raumtemperatur bis zu 110°C durch, besonders bevorzugt bis 80°C.

In einer Ausführungsform der vorliegenden Erfindung führt man das Vermischen in Schritt (a) bei Normaldruck durch. In anderen Ausführungsformen führt man das Vermischen bei erhöhtem Druck durch, beispielsweise bei 1,1 bis zu 20 bar. In anderen Ausführungsformen führt man das Vermischen in Schritt (a) bei reduziertem Druck durch, beispielsweise bei 10 mbar bis zu 990 mbar.

Das Vermischen in Schritt (a) kann man über einen Zeitraum im Bereich von einer Minute bis zu 12 Stunden durchführen, bevorzugt sind 15 Minuten bis 4 Stunden, besonders bevorzugt 20 Minuten bis 2 Stunden.

In einer Ausführungsform der vorliegenden Erfindung führt man das Vermischen in Schritt (a) in einer Stufe durch.

In einer anderen Ausführungsform führt man das Vermischen in Schritt (a) in zwei oder mehr Stufen durch. So ist es beispielsweise möglich, zunächst Eisenverbindung (D1) und Lithiumverbindung (B) gemeinsam in Wasser zu lösen bzw. zu suspendieren, danach mit Phosphorverbindung (A) und Kohlenstoffquelle (C) sowie Eisenverbindung (D2) zu vermischen und danach gegebenenfalls mit Reduktionsmittel (E) und/oder weiterer Metallverbindung (F) zu vermischen. In einer Ausführungsform legt man zunächst Wasser und/oder organisches Lösungsmittel vor, versetzt dann mit nacheinander mit Lithiumverbindung (B), Eisenverbindung (D1) und Eisenverbindung (D2), Phosphor oder Phosphorverbindung (C), Kohlenstoffquelle (B) und gegebenenfalls mit Reduktionsmittel (E) und/oder weiterer Metallverbindung (F).

Durch Schritt (a) erhält man eine Mischung von mindestens einer Phosphorverbindung (A), mindestens einer Lithiumverbindung (B), mindestens einer Kohlenstoffquelle (C), mindestens einer Eisenverbindung (D1), mindestens einer Eisenverbindung (D2), gegebenenfalls Reduktionsmittel (E), gegebenenfalls weiterer Metallverbindung (F) und vorzugsweise Wasser und/oder mindestens einem organischen Lösungsmittel (G) in pastöser Form, als Wasser-haltiges Pulver, als Suspension oder als Lösung.

Vor der eigentlichen thermischen Behandlung nach Schritt (b) kann man Mischung aus Schritt (a) trocknen.

Wenn man in Schritt (a) in Abwesenheit von Wasser und organischem Lösungsmittel (G) durchgeführt hat, ist ein separater Trocknungsschritt nicht erforderlich.

Zum Trocknen kann man beispielsweise so vorgehen, dass man Wasser oder organisches Lösungsmittel (G) oder beides verdampft, beispielsweise durch Abdestillieren, Gefriertrocknen, bevorzugt durch Zerstäubungstrocknen und insbesondere durch Sprühtrocknen.

In einer Ausführungsform der vorliegenden Erfindung trocknet man die Mischung aus Schritt (a), beispielsweise mit einem Zerstäubungstrockner. Geeignet sind beispielsweise Zerstäubungstrockner mit Scheibenzerstäubern, mit Druckdüsenzerstäubung und solche mit Zweistoffdüsenzerstäubung, insbesondere mit innen mischenden Zweistoffdüsen.

In einer Ausführungsform der vorliegenden Erfindung sprühtrocknet man die Mischung aus Schritt (a) mit Hilfe einer mindestens Apparatur, die sich zum Versprühen mindestens einer Sprühdüse bedient, d.h. man führt eine Sprühtrocknung oder Zerstäubungstrocknung durch. Die Sprühtrocknung kann man in einem Sprühtrockner durchführen. Geeignete Sprühtrockner sind Trockentürme, beispielsweise Trockentürme mit einer oder mehreren Zerstäubungsdüsen und Sprühtrockner mit integriertem Wirbelbett.

Besonders bevorzugte Düsen sind Zweistoffdüsen (englisch: two phase nozzles), also Düsen, in deren Innerem oder an deren Mündungen mittels getrennter Zugänge Stoffe verschiedenen Aggregatzustandes intensiv vermischt gebracht werden. Weitere Beispiele für geeignete Düsen sind Kombidüsen, beispielsweise Kombinationen von Zweistoff- und Druckdüsen.

Zur Durchführung der Trocknung kann man so vorgehen, dass man in einer Variante die in Schritt (a) erhaltene Mischung durch eine oder mehrere Sprüheinrichtungen presst, beispielsweise durch eine oder mehrere Düsen oder in einen Heißluftstrom oder in einen heißen Inertgasstrom oder heiße Brennerabgase, wobei der Heißgasstrom bzw. der heiße Inertgasstrom oder die heißen Brennerabgase eine Temperatur im Bereich von 170 bis 550°C haben kann, bevorzugt 200 bis 350°C, insbesondere 250 bis 330°C. Dadurch wird die Mischung innerhalb von Bruchteilen einer Sekunde oder innerhalb von wenigen Sekunden zu einem Trockengut getrocknet, das vorzugsweise als Pulver anfällt. Das anfallende Pulver kann eine gewisse Restfeuchte aufweisen, beispielsweise im Bereich von 500 ppm bis 10 Gew.-%, bevorzugt im Bereich von 1 bis 8 Gew.-%, besonders bevorzugt im Bereich von 2 bis 6 Gew.-%.

Die Ausgangstemperatur des Gasstroms kann beispielsweise im Bereich 90 bis 190°C liegen, bevorzugt 110 bis 170°C, insbesondere 125 bis 150°C.

In einer bevorzugten Ausführungsform wählt man die Temperatur des Heißluftstroms bzw. des heißen Inertgasstroms bzw. der heißen Brennerabgase so, dass sie oberhalb der Temperatur in Schritt (a) liegt.

In einer Ausführungsform der vorliegenden Erfindung strömt der Heißluftstrom oder der heiße Inertgasstrom oder die heißen Brennerabgase in Richtung mit der eingebrachten Mischung aus Schritt (a) (Gleichstromverfahren). In einer anderen Ausführungsform der vorliegenden Erfindung strömt der Heißluftstrom oder heiße Inertgasstrom die heißen Brennerabgase in Gegenrichtung zur eingebrachten Mischung aus Schritt (a) (Gegenstromverfahren). Die Sprüheinrichtung befindet vorzugsweise sich am oberen Teil des Sprühtrockners, insbesondere des Sprühturms.

Anfallendes Trockengut kann man im Anschluss an die eigentliche Sprühtrocknung durch einen Abscheider, beispielsweise einen Zyklon vom Heißluftstrom bzw. heißen Inertgasstrom bzw. von den heißen Brennerabgasen abtrennen. In einer anderen Ausführungsform trennt man angefallenes Trockengut im Anschluss an die eigentliche Sprühtrocknung durch einen oder mehrere Filter vom Heißluftstrom bzw. heißen Inertgasstrom bzw. von den heißen Brennerabgasen ab.

Trockengut kann beispielsweise einen mittleren Partikeldurchmesser (D50, Gewichtsmittel) im Bereich von 1 bis 50 µm aufweisen. Bevorzugt ist dabei, wenn der mittlere Partikeldurchmesser (D99), (bestimmt als Volumenmittel) bis zu 120 µm beträgt, besonders bevorzugt bis zu 50 µm und ganz besonders bevorzugt bis zu 20 µm.

Die Trocknung kann man absatzweise (diskontinuierlich) oder auch kontinuierlich durchführen.

In Schritt (b) des erfindungsgemäßen Verfahrens behandelt man die Mischung aus Schritt (a) bzw. das Trockengut thermisch, und vorzugsweise zwar bei Temperaturen im Bereich von 350 bis 1200°C, bevorzugt 400 bis 900°C.

In einer Ausführungsform der vorliegenden Erfindung führt man die thermische Behandlung in Schritt (b) in einem Temperaturprofil mit zwei bis fünf, bevorzugt mit drei oder vier Zonen durch, wobei jede Zone des Temperaturprofils vorzugsweise eine höhere Temperatur aufweist als die vorgehende. Beispielsweise kann man in einer ersten Zone eine Temperatur im Bereich von 350 bis 550°C einstellen, in einer zweiten Zone im Bereich von 450 bis 750°C, wobei die Temperatur höher ist als in der ersten Zone. Wünscht man eine dritte Zone einzuführen, so kann man in der dritten Zone bei 700 bis 1200°C thermisch behandeln, aber in jedem Falle bei einer Temperatur, die höher ist als in der zweiten Zone. Die Zonen kann man beispielsweise durch das Einstellen bestimmter Heizzonen erzeugen.

Wünscht man Schritt (b) absatzweise durchzuführen, so kann man ein zeitliches Temperaturprofil einstellen, d. h. man behandelt beispielsweise zunächst bei 350 bis 550°C, dann bei 450 bis 750°C, wobei die Temperatur höher ist als in der ersten Phase. Wünscht man eine dritte Phase einzuführen, so kann man in der dritten Phase bei 700 bis 1200°C thermisch behandeln, aber in jedem Falle bei einer Temperatur, die höher ist als in der zweiten Phase.

Die thermische Behandlung gemäß Schritt (b) kann man beispielsweise in einem Drehrohrofen, einem Durchschiebeofen oder RHK (englisch roller-hearth-kiln), einem Pendelreaktor, einem Muffeloffen, einem Kalzinationsofen oder einem Quarzkugelofen durchführen.

Die thermische Behandlung gemäß Schritt (b) kann man beispielsweise in einer schwach oxidierenden Atmosphäre, bevorzugt in inerter oder reduzierender Atmosphäre durchführen.

Unter schwach oxidierend wird dabei im Rahmen der vorliegenden Erfindung eine Sauerstoff-haltige Stickstoffatmosphäre verstanden, die bis zu 2 Vol.-% Sauerstoff enthält, bevorzugt bis zu 1 Vol.-%.

Beispiele für inerte Atmosphäre sind Edelgas-, insbesondere Argonatmosphäre, und Stickstoffatmosphäre. Beispiele für eine reduzierende Atmosphäre sind Stickstoff oder Edelgase, die 0,1 bis 10 Vol.-% Kohlenmonoxid, Ammoniak, Wasserstoff oder Kohlenwasserstoff enthalten, insbesondere Methan. Weitere Beispiele für eine reduzierende Atmosphäre sind Luft oder mit Stickstoff oder mit Kohlendioxid angereicherte Luft, die jeweils mehr mol-% Kohlenmonoxid, Wasserstoff oder Kohlenwasserstoff enthalten als Sauerstoff.

In einer Ausführungsform der vorliegenden Erfindung kann man Schritt (b) über einen Zeitraum im Bereich von 1 Minute bis zu 24 Stunden, bevorzugt im Bereich von 10 Minuten bis 3 Stunden durchführen.

Das erfindungsgemäße Verfahren lässt sich ohne große Staubbelastung durchführen. Durch das erfindungsgemäße Verfahren sind Elektrodenmaterialien mit vorzüglichen rheologischen Eigenschaften zugänglich, die sich als Elektrodenmaterialien eignen und sehr gut verarbeiten lassen. Beispielsweise lassen sie sich zu Pasten mit guten rheologischen Eigenschaften verarbeiten, derartige Pasten haben eine geringere Viskosität.

Nach dem erfindungsgemäßen Verfahren hergestellte Materialien zeichnen sich durch sehr gute Ratenfähigkeit aus, also sehr guter Kapazität bei hoher Entladegeschwindigkeit. Sie sind daher zum Betreiben von Geräten wie beispielsweise Bohrern und Akkubohrschraubern sehr gut geeignet.

Ein weiterer Gegenstand der vorliegenden Erfindung sind Elektrodenmaterialien in partikulärer Form, enthaltend Agglomerate von Primärpartikeln, wobei die Agglomerate enthalten
i. Primärpartikel von lithiiertem Eisenphosphat mit Olivinstruktur, kurz auch "Primärpartikel (i)" genannt, wobei die Primärpartikel (i) einen mittleren Durchmesser (D50) im Bereich von 20 bis 250 nm, bevorzugt 50 bis 150 nm aufweisen,
ii. Primärpartikel von lithiiertem Eisenphosphat mit Olivinstruktur, kurz auch "Primärpartikel (ii)" genannt, wobei die Primärpartikel (ii) einen mittleren Durchmesser (D50) im Bereich von 300 bis 1000, bevorzugt 350 bis 750 nm aufweisen,
iii. gegebenenfalls Kohlenstoff in elektrisch leitfähiger Modifikation, kurz auch "Kohlenstoff (iii)" genannt.

Dabei kann Kohlenstoff (iii) einen mittleren Partikeldurchmesser (D50) (Primärpartikeldurchmesser) im Bereich von 1 bis 500 nm auf, bevorzugt im Bereich von 2 bis 100 nm, besonders bevorzugt im Bereich von 3 bis 50 nm, ganz besonders bevorzugt im Bereich von 4 bis 10 nm. Dabei werden Partikeldurchmesser von Kohlenstoff (iii) im Rahmen der vorliegenden Erfindung bevorzugt als Volumenmittel angegeben, bestimmbar beispielsweise durch XRD-Analyse und durch bildgebende Verfahren wie SEM / TEM.

Den mittleren Durchmesser von Primärpartikeln (i) und Primärpartikeln (ii) lassen sich durch XRD-Analyse und durch bildgebende Verfahren wie REM / TEM nachweisen, die Durchmesser der Sekundärpartikel (ii) beispielsweise durch Laserbeugung an Dispersionen (gasförmig oder flüssig).

In einer Ausführungsform der vorliegenden Erfindung liegen Primärpartikel (i) und Primärpartikel (ii) in Agglomeraten in einem Volumenverhältnis (D50) im Bereich von 1:9 bis 1:1 vor.

In einer Ausführungsform der vorliegenden Erfindung liegt das Gewichtsverhältnis der Summe von Primärpartikeln (i) und Primärpartikeln (ii) zu Kohlenstoff (iii) im Bereich von 200:1 bis 5:1, bevorzugt 100 : 1 bis 10 : 1, besonders bevorzugt 100 : 1,5 bis 20 : 1.

Kohlenstoff (iii) kann in den Poren von Sekundärpartikeln (Agglomeraten) von Primärpartikeln (i) und Primärpartikeln (ii) oder in Form von Partikeln vorliegen, die Agglomerate von Primärpartikeln (i) und Primärpartikeln (ii) punktförmig oder einen oder mehrere Partikel von Kohlenstoff (iii) kontaktieren können.

In einer anderen Ausführungsform der vorliegenden Erfindung kann Kohlenstoff (iii) als Beschichtung von Agglomeraten von Primärpartikeln (i) und Primärpartikeln (ii) vorliegen, und zwar als komplette Beschichtung oder als partielle Beschichtung. Eine derartige gegebenenfalls partielle Beschichtung kann beispielsweise auch im Inneren von Agglomeraten von Primärpartikeln (i) und Primärpartikeln (ii) vorliegen, also in Poren.

In einer Ausführungsform der vorliegenden Erfindung liegen Kohlenstoff (iii) und Agglomerate von Primärpartikeln (i) und Primärpartikeln (ii) in diskreten Partikeln, die einander punktförmig oder gar nicht kontaktieren, nebeneinander vor.

In einer Ausführungsform der vorliegenden Erfindung liegt Kohlenstoff (iii) teilweise als Beschichtung von Agglomeraten von Primärpartikeln (i) und Primärpartikeln (ii) als auch in Form separater Partikel vor.

Die vorstehend beschriebene Morphologie von Kohlenstoff (iii) und von Agglomeraten von Primärpartikeln (i) und Primärpartikeln (ii) lässt sich beispielsweise durch Lichtmikroskopie, Transmissionselektronenmikroskopie (TEM) oder Rasterelektronenmikroskopie (SEM) oder SEM an Schnittaufnahmen nachweisen, außerdem beispielsweise röntgenographisch am Beugungsbild.

In einer Ausführungsform der vorliegenden Erfindung liegen Agglomerate von Primärpartikeln (i) und Primärpartikeln (ii) in Form von Partikeln vor, die einen mittleren Partikeldurchmesser im Bereich von 1 bis 150 µm (D50) aufweisen. Bevorzugt sind mittlere Partikeldurchmesser (D50) der Agglomerate im Bereich von 1 bis 50 µm, besonders bevorzugt im Bereich von 1 bis 30 µm, beispielsweise bestimmbar durch Laserbeugung.

In einer Ausführungsform der vorliegenden Erfindung liegen Agglomerate von Primärpartikeln (i) und Primärpartikeln (ii) in Form von Partikeln vor, die einen mittleren Porendurchmesser im Bereich von 0,05 µm bis 2 µm aufweisen und die in Agglomeraten vorliegen können. Der mittlere Porendurchmesser lässt sich beispielsweise durch Quecksilberporosimetrie bestimmen, beispielsweise nach DIN 66133.

In einer Ausführungsform der vorliegenden Erfindung liegen Agglomerate von Primärpartikeln (i) und Primärpartikeln (ii) in Form von Partikeln vor, die einen mittleren Porendurchmesser im Bereich von 0,05 µm bis 2 µm aufweisen und einen mono- oder multimodale Verlauf der Intrusionsvolumina im Bereich 100 bis 0,001 µm zeigen und dabei vorzugsweise ein ausgeprägtes Maximum im Bereich zwischen 10 µm und 1 µm aufweisen, bevorzugt zwei ausgeprägte Maxima, je eins zwischen 10 und 1 sowie zwischen 1 und 0,1 µm.

Bei Kohlenstoff (iii) handelt es sich beispielsweise um Ruß, Graphit, Graphen, Kohlenstoff-Nanoröhren, expandierte Graphite, interkalierte Graphite oder Aktivkohle.

In einer Ausführungsform der vorliegenden Erfindung handelt es sich bei Kohlenstoff (iii) um Ruß. Ruß kann beispielsweise gewählt werden aus Lampenruß, Ofenruß, Flammenruß, Thermalruß, Acetylenruß, Industrieruß und Furnace Ruß. Ruß kann Verunreinigungen enthalten, beispielsweise Kohlenwasserstoffe, insbesondere aromatische Kohlenwasserstoffe, oder Sauerstoff-haltige Verbindungen bzw. Sauerstoff-haltige Gruppen wie beispielsweise OH-Gruppen, Epoxidgruppen, Carbonyl-Gruppen und/oder Carboxyl-Gruppen. Weiterhin sind Schwefel- oder Eisen-haltige Verunreinigungen in Ruß möglich.

In einer Variante handelt es sich bei Kohlenstoff (iii) um partiell oxidierten Ruß. Partiell oxidierter Ruß, auch als aktivierter Ruß bezeichnet, enthält Sauerstoff-haltige Gruppen wie beispielsweise OH-Gruppen, Epoxidgruppen, Carbonyl-Gruppen und/oder Carboxyl-Gruppen.

In einer Ausführungsform der vorliegenden Erfindung handelt es sich Kohlenstoff (iii) um Kohlenstoff-Nanoröhren. Kohlenstoff-Nanoröhren (Kohlenstoffnanoröhren, kurz CNT oder englisch carbon nanotubes), beispielsweise einwandige Kohlenstoffnanoröhren (englisch single-walled carbon nanotubes, SW CNT) und bevorzugt mehrwandige Kohlenstoffnanoröhren (englisch multi-walled carbon nanotubes, MW CNT), sind an sich bekannt. Ein Verfahren zu ihrer Herstellung und einige Eigenschaften werden beispielsweise von A. Jess et al. in Chemie Ingenieur Technik 2006, 78, 94 - 100 beschrieben.

In einer Ausführungsform der vorliegenden Erfindung haben Kohlenstoffnanoröhren einen Durchmesser im Bereich von 0,4 bis 50 nm, bevorzugt 1 bis 25 nm.

In einer Ausführungsform der vorliegenden Erfindung haben Kohlenstoffnanoröhren eine Länge im Bereich von 10 nm bis 1 mm, bevorzugt 100 nm bis 500 nm.

Kohlenstoff-Nanoröhren kann man nach an sich bekannten Verfahren herstellen. Beispielsweise kann man eine flüchtige Kohlenstoff-haltige Verbindung wie beispielsweise Methan oder Kohlenmonoxid, Acetylen oder Ethylen, oder ein Gemisch von flüchtigen Kohlenstoff-haltigen Verbindungen wie beispielsweise Synthesegas in Gegenwart von einem oder mehreren Reduktionsmitteln wie beispielsweise Wasserstoff und/oder einem weiteren Gas wie beispielsweise Stickstoff zersetzen. Ein anderes geeignetes Gasgemisch ist eine Mischung von Kohlenmonoxid mit Ethylen. Geeignete Temperaturen zur Zersetzung liegen beispielsweise im Bereich von 400 bis 1000°C, bevorzugt 500 bis 800°C. Geeignete Druckbedingungen für die Zersetzung sind beispielsweise im Bereich von Normaldruck bis 100 bar, bevorzugt bis 10 bar.

Ein- oder mehrwandige Kohlenstoffnanoröhren kann man beispielsweise durch Zersetzung von Kohlenstoff-haltigen Verbindungen im Lichtbogen erhalten, und zwar in Anwesenheit bzw. Abwesenheit eines Zersetzungskatalysators.

In einer Ausführungsform führt man die Zersetzung von flüchtiger Kohlenstoff-haltiger Verbindung bzw. Kohlenstoff-haltigen Verbindungen in Gegenwart eines Zersetzungskatalysators durch, beispielsweise Fe, Co oder bevorzugt Ni.

Unter Graphen wird im Rahmen der vorliegenden Erfindung fast ideal oder ideal zweidimensionale hexagonale Kohlenstoffkristalle verstanden, die analog zu einzelnen Graphitschichten aufgebaut sind. Sie können eine C-Atom-Schicht dick sein oder nur wenige, beispielsweise 2 bis 5 C-Atom-Schichten. Man kann Graphen durch Exfoliation oder durch Delaminierung von Graphit herstellen.

Unter interkalierten Graphiten werden im Rahmen der vorliegenden Erfindung nicht vollständig delaminierte Graphite verstanden, die andere Atome, Ionen oder Verbindungen zwischen den hexagonalen C-Atom-Schichten eingelagert enthalten. Eingelagert können beispielsweise Alkalimetallionen sein, SO₃, Nitrat oder Acetat. Die Herstellung interkalierter Graphite (auch: Blähgraphite) sind bekannt, siehe beispielsweise Rüdorff, Z. anorg. Allg. Chem. 1938, 238(1), 1. Interkalierte Graphite sind z.B. durch thermische Expansion von Graphit darstellbar.

Expandierte Graphite kann man beispielsweise durch Expansion interkalierter Graphite erhalten, siehe z.B. McAllister et al. Chem. Mater. 2007, 19, 4396-4404.

In einer Ausführungsform der vorliegenden Erfindung handelt es sich bei erfindungsgemäßen Elektrodenmaterialien um solche, die man nach dem vorstehend beschriebenen erfindungsgemäßen Verfahren hergestellt hat.

In einer Ausführungsform der vorliegenden Erfindung enthält erfindungsgemäßes Elektrodenmaterial zusätzlich mindestens ein Bindemittel (iv), beispielsweise ein polymeres Bindemittel.

Geeignete Bindemittel (iv) sind vorzugsweise gewählt aus organischen (Co)polymeren. Geeignete (Co)polymere, also Homopolymere oder Copolymere, kann man beispielsweise wählen aus durch anionische, katalytische oder radikalische (Co)polymerisation erhältlichen (Co)polymeren, insbesondere aus Polyethylen, Polyacrylnitril, Polybutadien, Polystyrol, und Copolymeren von mindestens zwei Comonomeren, gewählt aus Ethylen, Propylen, Styrol, (Meth)acrylnitril und 1,3-Butadien. Außerdem ist Polypropylen geeignet. Weiterhin sind Polyisopren und Polyacrylate geeignet. Besonders bevorzugt ist Polyacrylnitril.

Unter Polyacrylnitril werden im Rahmen der vorliegenden Erfindung nicht nur Polyacrylnitril-Homopolymere verstanden, sondern auch Copolymere von Acrylnitril mit 1,3-Butadien oder Styrol. Bevorzugt sind Polyacrylnitril-Homopolymere.

Im Rahmen der vorliegenden Erfindung wird unter Polyethylen nicht nur Homo-Polyethylen verstanden, sondern auch Copolymere des Ethylens, die mindestens 50 mol-% Ethylen einpolymerisiert enthalten und bis zu 50 mol-% von mindestens einem weiteren Comonomer, beispielsweise α-Olefine wie Propylen, Butylen (1-Buten), 1-Hexen, 1-Octen, 1-Decen, 1-Dodecen, 1-Penten, weiterhin Isobuten, Vinylaromaten wie beispielsweise Styrol, weiterhin (Meth)acrylsäure, Vinylacetat, Vinylpropionat, C₁-C₁₀-Alkylester der (Meth)acrylsäure, insbesondere Methylacrylat, Methylmethacrylat, Ethylacrylat, Ethylmethacrylat, n-Butylacrylat, 2-Ethylhexylacrylat, n-Butylmethacrylat, 2-Ethylhexylmethacrylat, weiterhin Maleinsäure, Maleinsäureanhydrid und Itaconsäureanhydrid. Bei Polyethylen kann es sich um HDPE oder um LDPE handeln.

Im Rahmen der vorliegenden Erfindung wird unter Polypropylen nicht nur Homo-Polypropylen verstanden, sondern auch Copolymere des Propylens, die mindestens 50 mol-% Propylen einpolymerisiert enthalten und bis zu 50 mol-% von mindestens einem weiteren Comonomer, beispielsweise Ethylen und α-Olefine wie Butylen, 1-Hexen, 1-Octen, 1-Decen, 1-Dodecen und 1-Penten. Bei Polypropylen handelt es sich vorzugsweise um isotaktisches oder um im Wesentlichen isotaktisches Polypropylen.

Im Rahmen der vorliegenden Erfindung werden unter Polystyrol nicht nur Homopolymere des Styrols verstanden, sondern auch Copolymere mit Acrylnitril, 1,3-Butadien, (Meth)acrylsäure, C₁-C₁₀-Alkylester der (Meth)acrylsäure, Divinylbenzol, insbesondere 1,3-Divinylbenzol, 1,2-Diphenylethylen und α-Methylstyrol.

Ein anderes bevorzugtes Bindemittel (iv) ist Polybutadien.

Andere geeignete Bindemittel (iv) sind gewählt aus Polyethylenoxid (PEO), Cellulose, Carboxymethylcellulose, Polyimiden und Polyvinylalkohol.

In einer Ausführungsform der vorliegenden Erfindung wählt man Bindemittel (iv) aus solchen (Co)polymeren, die ein mittleres Molekulargewicht M_{w} im Bereich von 50.000 bis 1.000.000 g/mol, bevorzugt bis 500.000 g/mol aufweisen.

Bei Bindemitteln (iv) kann es sich um vernetzte oder unvernetzte (Co)polymere handeln.

In einer besonders bevorzugten Ausführungsform der vorliegenden Erfindung wählt man Bindemittel (iv) aus halogenierten (Co)polymeren, insbesondere aus fluorierten (Co)polymeren. Dabei werden unter halogenierten bzw. fluorierten (Co)polymeren solche (Co)polymere verstanden, die mindestens ein (Co)monomer einpolymerisiert enthalten, das mindestens ein Halogenatom bzw. mindestens ein Fluoratom pro Molekül aufweist, bevorzugt mindestens zwei Halogenatome bzw. mindestens zwei Fluoratome pro Molekül.

Beispiele sind Polyvinylchlorid, Polyvinylidenchlorid, Polytetrafluorethylen, Polyvinylidenfluorid (PVdF), Tetrafluoroethylen-Hexafluorpropylen-Copolymere, Vinylidenfluorid-Hexafluorpropylen-Copolymere (PVdF-HFP), Vinylidenfluorid-Tetrafluorethylen-Copolymere, Perfluoralkylvinylether-Copolymere, Ethylen-Tetrafluorethylen-Copolymere, Vinylidenfluorid-Chlortrifluorethylen-Copolymere und Ethylen-Chlorfluorethylen-Copolymere.

Geeignete Bindemittel (iv) sind insbesondere Polyvinylalkohol und halogenierte (Co)polymere, beispielsweise Polyvinylchlorid oder Polyvinylidenchlorid, insbesondere fluorierte (Co)polymere wie Polyvinylfluorid und insbesondere Polyvinylidenfluorid und Polytetrafluorethylen.

In einer Ausführungsform der vorliegenden Erfindung enthält erfindungsgemäßes Elektrodenmaterial:
insgesamt im Bereich von 60 bis 98 Gew.-%, bevorzugt 70 bis 96 Gew.-% Agglomerate von Primärpartikeln (i) und Primärpartikeln (ii),
im Bereich von 1 bis 25 Gew.-% bevorzugt 2 bis 20 Gew.-% Kohlenstoff (iii),
im Bereich von 1 bis 20 Gew.-%, bevorzugt 2 bis 15 Gew.-% Bindemittel (iv).

Erfindungsgemäße Elektrodenmaterialien lassen sich gut zur Herstellung von elektrochemischen Zellen verwenden. Beispielsweise lassen sie sich zu Pasten mit guten rheologischen Eigenschaften verarbeiten.

Ein weiterer Gegenstand der vorliegenden Erfindung sind elektrochemische Zellen, hergestellt unter Verwendung von mindestens einer erfindungsgemäßen Elektrode. Ein weiterer Gegenstand der vorliegenden Erfindung sind elektrochemische Zellen, enthaltend mindestens eine erfindungsgemäße Elektrode.

Ein weiterer Aspekt der vorliegenden Erfindung ist eine Elektrode, enthaltend Agglomerate von Primärpartikeln (i) und Primärpartikeln (ii), Kohlenstoff (iii) und mindestens ein Bindemittel (iv).

Agglomerate von Primärpartikeln (i) und Primärpartikeln (ii), Kohlenstoff (iii) und Bindemittel (iv) sind vorstehend beschrieben.

Die Geometrie von erfindungsgemäßen Elektroden kann man in weiten Grenzen wählen. Bevorzugt ist es, erfindungsgemäße Elektroden in dünnen Filmen auszugestalten, beispielsweise in Filmen mit einer Dicke im Bereich von 10 µm bis 250 µm, bevorzugt 20 bis 130 µm.

In einer Ausführungsform der vorliegenden Erfindung umfassen erfindungsgemäße Elektroden eine Folie, beispielsweise eine Metallfolie, insbesondere eine Aluminiumfolie, oder eine Polymerfolie, beispielsweise eine Polyesterfolie, die unbehandelt oder silikonisiert sein kann. Die Folie ist ein- oder beidseitig mit erfindungsgemäßem Elektrodenmaterial beschichtet.

Ein weiterer Aspekt der vorliegenden Erfindung ist die Verwendung von erfindungsgemäßen Elektrodenmaterialien zur Herstellung von Elektroden von Lithium-Ionen-Batterien. Ein weiterer Aspekt der vorliegenden Erfindung ist ein Verfahren zur Herstellung von Elektroden unter Verwendung von erfindungsgemäßen Elektrodenmaterialien.

Erfindungsgemäße Elektroden dienen in erfindungsgemäßen elektrochemischen Zellen definitionsgemäß als Kathoden. Erfindungsgemäße elektrochemische Zellen enthalten eine Gegenelektrode, die im Rahmen der vorliegenden Erfindung als Anode definiert wird und die beispielsweise eine Kohlenstoff-Anode, insbesondere eine Graphit-Anode, eine Lithium-Anode, eine Silizium-Anode oder eine Lithium-Titanat-Anode sein kann.

Bei erfindungsgemäßen elektrochemischen Zellen kann es sich beispielsweise um Batterien oder um Akkumulatoren handeln.

Erfindungsgemäße elektrochemische Zellen können neben Anode und erfindungsgemäßer Elektrode weitere Bestandteile umfassen, beispielsweise Leitsalz, nicht-wässriges Lösungsmittel, Separator, Stromableiter, beispielsweise aus einem Metall oder einer Legierung, weiterhin Kabelverbindungen und Gehäuse.

In einer Ausführungsform der vorliegenden Erfindung enthalten erfindungsgemäße elektrische Zellen mindestens ein nicht-wässriges Lösungsmittel, das bei Zimmertemperatur flüssig oder fest sein kann, bevorzugt gewählt aus Polymeren, cyclischen oder nicht-cyclischen Ethern, cyclischen und nicht-cyclischen Acetalen und cyclischen oder nicht cyclischen organischen Carbonaten.

Beispiele für geeignete Polymere sind insbesondere Polyalkylenglykole, bevorzugt Poly-C₁-C₄-alkylenglykole und insbesondere Polyethylenglykole. Dabei können Polyethylenglykole bis zu 20 mol-% ein oder mehrere C₁-C₄-Alkylenglykole einpolymerisiert enthalten. Vorzugsweise handelt es sich bei Polyalkylenglykolen um zweifach mit Methyl oder Ethyl verkappte Polyalkylenglykole.

Das Molekulargewicht M_{w} von geeigneten Polyalkylenglykolen und insbesondere von geeigneten Polyethylenglykolen kann mindestens 400 g/mol betragen.

Das Molekulargewicht M_{w} von geeigneten Polyalkylenglykolen und insbesondere von geeigneten Polyethylenglykolen kann bis zu 5.000.000 g/mol betragen, bevorzugt bis zu 2.000.000 g/mol betragen

Beispiele für geeignete nicht-cyclische Ether sind beispielsweise Diisopropylether, Di-n-Butylether, 1,2-Dimethoxyethan, 1,2-Diethoxyethan, bevorzugt ist 1,2-Dimethoxyethan.

Beispiele für geeignete cyclische Ether sind Tetrahydrofuran und 1,4-Dioxan.

Beispiele für geeignete nicht-cyclische Acetale sind beispielsweise Dimethoxymethan, Diethoxymethan, 1,1-Dimethoxyethan und 1,1-Diethoxyethan.

Beispiele für geeignete cyclische Acetale sind 1,3-Dioxan und insbesondere 1,3-Dioxolan.

Beispiele für geeignete nicht-cyclische organische Carbonate sind Dimethylcarbonat, Ethylmethylcarbonat und Diethylcarbonat.

Beispiele für geeignete cyclische organische Carbonate sind Verbindungen der allgemeinen Formeln (II) und (III) 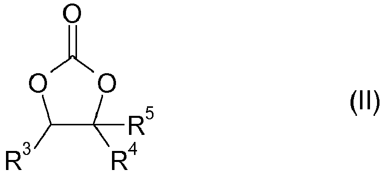 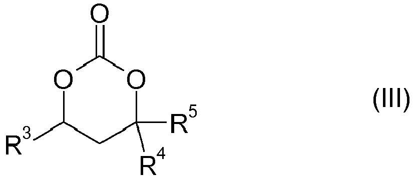 bei denen R³, R⁴ und R⁵ gleich oder verschieden sein können und gewählt aus Wasserstoff und C₁-C₄-Alkyl, beispielsweise Methyl, Ethyl, n-Propyl, iso-Propyl, n-Butyl, iso-Butyl, sec.-Butyl und tert.-Butyl, wobei vorzugsweise R⁴ und R⁵ nicht beide tert.-Butyl sind.

In besonders bevorzugten Ausführungsformen ist R³ Methyl und R⁴ und R⁵ sind jeweils Wasserstoff, oder R⁵, R³ und R⁴ sind jeweils gleich Wasserstoff.

Ein anderes bevorzugtes cyclisches organisches Carbonat ist Vinylencarbonat, Formel (IV).

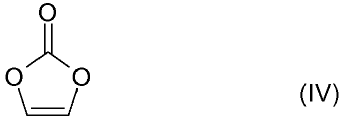

Vorzugsweise setzt man das oder die Lösungsmittel im so genannten wasserfreien Zustand ein, d.h. mit einem Wassergehalt im Bereich von 1 ppm bis 0,1 Gew.-%, bestimmbar beispielsweise durch Karl-Fischer-Titration.

Erfindungsgemäße elektrochemische Zellen enthalten weiterhin mindestens ein Leitsalz. Geeignete Leitsalze sind insbesondere Lithiumsalze. Beispiele für geeignete Lithiumsalze sind LiPF₆, LiBF₄, LiClO₄, LiAsF₆, LiCF₃SO₃, LiC(CₙF₂ₙ₊₁SO₂)₃, Lithiumimide wie LiN(CₙF₂ₙ₊₁SO₂)₂, wobei n eine ganze Zahl im Bereich von 1 bis 20 ist, LiN(SO₂F)₂, Li₂SiF₆, LiSbF₆, LiAlCl₄, und Salze der allgemeinen Formel (CₙF₂ₙ₊₁SO₂)mYLi, wobei m wie folgt definiert ist:
m = 1, wenn Y gewählt wird aus Sauerstoff und Schwefel,
m = 2, wenn Y gewählt wird aus Stickstoff und Phosphor, und
m = 3, wenn Y gewählt wird aus Kohlenstoff und Silizium.

Bevorzugte Leitsalze sind gewählt aus LiC(CF₃SO₂)₃, LiN(CF₃SO₂)₂, LiPF₆, LiBF₄,

LiClO₄, und besonders bevorzugt sind LiPF₆ und LiN(CF₃SO₂)₂.

In einer Ausführungsform der vorliegenden Erfindung enthalten erfindungsgemäße elektrochemische Zellen einen oder mehrere Separatoren, durch die die Elektroden mechanisch getrennt sind. Als Separatoren sind Polymerfilme, insbesondere poröse Polymerfilme, geeignet, die gegenüber metallischem Lithium unreaktiv sind. Besonders geeignete Materialien für Separatoren sind Polyolefine, insbesondere filmförmiges poröses Polyethylen und filmförmiges poröses Polypropylen.

Separatoren aus Polyolefin, insbesondere aus Polyethylen oder Polypropylen, können eine Porosität im Bereich von 35 bis 45% haben. Geeignete Porendurchmesser liegen beispielsweise im Bereich von 30 bis 500 nm.

In einer anderen Ausführungsform der vorliegenden Erfindung kann man Separatoren aus mit anorganischen Partikeln gefüllten PET-Vliesen wählen. Derartige Separatoren können eine Porosität im Bereich von 40 bis 55 % aufweisen. Geeignete Porendurchmesser liegen beispielsweise im Bereich von 80 bis 750 nm.

Erfindungsgemäße elektrochemische Zellen enthalten weiterhin ein Gehäuse, das beliebige Form haben kann, beispielsweise quaderförmig oder die Form einer zylindrischen Scheibe. In einer Variante wird als Gehäuse eine als Beutel ausgearbeitete Metallfolie eingesetzt.

Erfindungsgemäße elektrochemische Zellen lassen sich miteinander kombinieren, beispielsweise in Reihenschaltung oder in Parallelschaltung. Reihenschaltung ist bevorzugt.

Ein weiterer Gegenstand der vorliegenden Erfindung ist die Verwendung von erfindungsgemä-βen elektrochemischen Zellen in Geräten, insbesondere in mobilen Geräten. Beispiele für mobile Geräte sind Fahrzeuge, beispielsweise Automobile, Zweiräder, Flugzeuge oder Wasserfahrzeuge wie Boote oder Schiffe. Andere Beispiele für mobile Geräte sind solche, die man selber bewegt, beispielsweise Computer, insbesondere Laptops, Telefone oder elektrische Handwerkszeuge, beispielsweise aus dem Bereich des Bauens, insbesondere Bohrmaschinen, Akkubohrschrauber oder Akku-Tacker.

Ein weiterer Aspekt der vorliegenden Erfindung sind Lithium-Ionen-Batterien, enthaltend mindestens eine Elektrode, enthaltend mindestens ein erfindungsgemäßes Elektrodenmaterial. Ein weiterer Aspekt der vorliegenden Erfindung sind dementsprechend Lithium-Ionen-Batterien, enthaltend mindestens eine erfindungsgemäße Elektrode.

Ein weiterer Aspekt der vorliegenden Erfindung ist die Verwendung von erfindungsgemäßen Lithium-Ionen-Batterien in Bohrmaschinen, Akkubohrschraubern oder Akku-Tackern oder in Batterien zum Kaltstart von Fahrzeugen, beispielsweise Automobilen oder Motorrädern. Erfindungsgemäße Lithium-Ionen-Batterien haben eine hohe Spitzenleistung und lassen sich schnell entladen, wenn man es wünscht, beispielsweise innerhalb von 6 Minuten bei 10C.

Die Erfindung wird durch Arbeitsbeispiele erläutert.

### Arbeitsbeispiele

### I. Herstellung eines Elektrodenmaterials

### I.1 Herstellung von erfindungsgemäßem Elektrodenmaterial EM.1

In Schritt (a.1) setzte man die folgenden Ausgangsmaterialien ein:

| | |
|---|---|
| 4,58 kg | H₃PO₃ (A.1) |
| 6,38 kg | H₃PO₄ (A.2) |
| 4,79 g | LiOH · H₂O (B.1) |
| 2,64 kg | Laktose (C.1) |
| 3,12 kg | Eisencitrat (D1.1) |
| 8,83 kg | α-FeOOH (D2.1) |

Zuerst wurden 108,8 kg vollentsalztes Wasser in einem 200-Liter-Doppelmantelrührgefäß mit Ankerrührer vorgelegt und auf 52°C aufgeheizt. Anschließend wurde das LiOH · H₂O (B.1) darin gelöst und dann die Eisenverbindungen (D1.1) und (D2.1) zugegeben. Danach wurden Phosphorverbindungen (A.1) und (A.2) zugegeben. Die Temperatur stieg auf 68°C. Danach gab man die Kohlenstoffquelle (C.1) zu. Man rührte bei 70°C über einen Zeitraum von vierzehn Stunden nach (pH-Wert: 4,5). Man erhielt eine gelbe Suspension.

### Trocknung

Die Lösung aus Schritt (a.1) wurde in einem Sprühturm nach Programm unter Luft versprüht. Der Heißluftstrom hatte beim Eingang eine Temperatur von 305°C, beim Ausgang noch 121°C. Der Trockner wurde mit 450 kg/h Trocknungsgas betrieben sowie 33 kg/h Düsengas (Zerstäubungsgas) mit einem Zerstäubungsdruck von 3,5 bar.

Man erhielt ein gelbes gut rieselfähiges Pulver mit einer Restfeuchte von 8%. Es lag in Form von Partikeln vor, deren Durchmesser (D50) 22,6 µm war. SEM-Bilder zeigten sphärische Agglomerate des gelben Pulvers, die im Inneren durch den organischen Bestandteil Laktose zusammengehalten wurden.

### Schritt (b.1)

60 g des wie vorstehend beschrieben erhaltenen gelben Pulvers wurden in einem 2-1-Quarzdrehkugelofen unter N₂-Atmosphäre thermisch behandelt. Die 2-1-Quarzdrehkugel drehte sich mit einer Geschwindigkeit von 10 Umdrehungen/min. Zunächst erhitzte man innerhalb von 60 Minuten auf 700°C. Dann kalzinierte man 60 Minuten bei 700°C. Danach ließ man auf Zimmertemperatur abkühlen. Man siebte (mesh 50 µm) und erhielt ein erfindungsgemäßes Elektrodenmaterial EM.1, welches schwarz aussah und pulverförmig anfiel. BET: 26 m²/g.

Die Stampfdichte der Siebfraktion <32µm betrug 0,73 g/ml.

### 1.2 Herstellung von Vergleichs-Elektrodenmaterial V-EM.2

In Schritt (a.2) setzte man die folgenden Ausgangsmaterialien ein:

| | |
|---|---|
| 5,33 kg | H₃PO₃ (A.1) |
| 7,43 kg | H₃PO₄ (A.2) |
| 5,57 g | LiOH · H₂O (B.1) |
| 4,11 kg | Mannitol (C.2) |
| 11,42 kg | α-FeOOH (D2.1) |

Zuerst wurden 128 kg vollentsalztes Wasser in einem 200-Liter-Doppelmantelrührgefäß mit Ankerrührer vorgelegt und auf 57°C aufgeheizt. Anschließend wurde das LiOH · H₂O (B.1) darin gelöst und dann die Eisenverbindung (D2.1) zugegeben. Danach wurden Phosphorverbindungen (A.1) und (A.2) zugegeben. Die Temperatur stieg auf 76°C. Danach gab man Kohlenstoffquelle (C.2) zu. Man rührte bei 70°C über einen Zeitraum von vierzehn Stunden nach (pH-Wert: 4,6). Man erhielt eine gelbe Suspension.

### Trocknung

Die Lösung aus Schritt (a.2) wurde in einem Sprühturm nach Programm unter Luft versprüht. Der Heißluftstrom hatte beim Eingang eine Temperatur von 305°C, beim Ausgang noch 121°C. Der Trockner wurde mit 450 kg/h Trocknungsgas betrieben sowie 33 kg/h Düsengas (Zerstäubungsgas) mit einem Zerstäubungsdruck von 3,5 bar.

Man erhielt ein gelbes gut rieselfähiges Pulver mit einer Restfeuchte von 8%. Es lag in Form von Partikeln vor, deren Durchmesser (D50) 18,3 µm war. SEM-Bilder zeigten sphärische Agglomerate des gelben Pulvers, die im Inneren durch den organischen Bestandteil Mannitol zusammengehalten wurden.

### Schritt (b.2)

60 g des wie vorstehend beschrieben erhaltenen gelben Pulvers wurden in einem 2-1-Quarzdrehkugelofen unter N₂-Atmosphäre thermisch behandelt. Die 2-1-Quarzdrehkugel drehte sich mit einer Geschwindigkeit von 10 Umdrehungen/min. Zunächst erhitzte man innerhalb von 60 Minuten auf 700°C. Dann kalzinierte man 60 Minuten bei 700°C. Danach ließ man auf Zimmertemperatur abkühlen. Man siebte (mesh 50 µm) und erhielt ein erfindungsgemäßes Elektrodenmaterial V-EM.2, welches schwarz aussah und pulverförmig anfiel. BET: 9,1 m²/g. Die Stampfdichte der Siebfraktion <32µm betrug 1,01 g/ml.

### 1.3 Herstellung von Vergleichs-Elektrodenmaterial V-EM.3

In Schritt (a.3) setzte man die folgenden Ausgangsmaterialien ein:

| | |
|---|---|
| 5,66 kg | H₃PO₃ (A.1) |
| 7,89 kg | H₃PO₄ (A.2) |
| 5,92 g | LiOH · H₂O (B.1) |
| 2,17 kg | Laktose (C.1) |
| 2,00 kg | Stärke (C.3) |
| 12,14 kg | α-FeOOH (D2.1) |

Zuerst wurden 136 kg vollentsalztes Wasser in einem 200-Liter-Doppelmantelrührgefäß mit Ankerrührer vorgelegt und auf 53°C aufgeheizt. Anschließend wurde das LiOH · H₂O (B.1) darin gelöst und dann die Eisenverbindung (D2.1) zugegeben. Danach wurden Phosphorverbindungen (A.1) und (A.2) zugegeben. Die Temperatur stieg auf 69°C. Danach gab man die Kohlenstoffquellen (C.1) und (C.3) zu. Man rührte bei 70°C über einen Zeitraum von vierzehn Stunden nach (pH-Wert: 4,6). Man erhielt eine gelbe Suspension.

### Trocknung

Die Lösung aus Schritt (a.3) wurde in einem Sprühturm nach Programm unter Luft versprüht. Der Heißluftstrom hatte beim Eingang eine Temperatur von 305°C, beim Ausgang noch 121 °C. Der Trockner wurde mit 450 kg/h Trocknungsgas betrieben sowie 33 kg/h Düsengas (Zerstäubungsgas) mit einem Zerstäubungsdruck von 3,5 bar.

Man erhielt ein gelbes gut rieselfähiges Pulver mit einer Restfeuchte von 8%. Es lag in Form von Partikeln vor, deren Durchmesser (D50) 8,5 µm war. SEM-Bilder zeigten sphärische Agglomerate des gelben Pulvers, die im Inneren durch den organischen Bestandteil Laktose/Stärke zusammengehalten wurden.

### Schritt (b.3)

60 g des wie vorstehend beschrieben erhaltenen gelben Pulvers wurden in einem 2-1-Quarzdrehkugelofen unter N₂-Atmosphäre thermisch behandelt. Die 2-1-Quarzdrehkugel drehte sich mit einer Geschwindigkeit von 10 Umdrehungen/min. Zunächst erhitzte man innerhalb von 60 Minuten auf 700°C. Dann kalzinierte man 60 Minuten bei 700°C. Danach ließ man auf Zimmertemperatur abkühlen. Man siebte (mesh 50 µm) und erhielt ein erfindungsgemäßes Elektrodenmaterial V-EM.3, welches schwarz aussah und pulverförmig anfiel. BET: 28 m²/g. Die Stampfdichte der Siebfraktion <32µm betrug 0,81 g/ml.

### I.4 Herstellung von Vergleichs-Elektrodenmaterial V-EM.4

In Schritt (a.4) setzte man die folgenden Ausgangsmaterialien ein:

| | |
|---|---|
| 5,73 kg | H₃PO₃ (A.1) |
| 8,02 kg | H₃PO₄ (A.2) |
| 6,01 g | LiOH · H₂O (B.1) |
| 1,38 kg | Laktose (C.1) |
| 1,24 kg | Stärke (C.3) |
| 12,53 kg | α-FeOOH (D2.1) |

Zuerst wurden 136 kg vollentsalztes Wasser in einem 200-Liter-Doppelmantelrührgefäß mit Ankerrührer vorgelegt und auf 44°C aufgeheizt. Anschließend wurde das LiOH - H₂O (B.1) darin gelöst und dann die Eisenverbindung (D2.1) zugegeben. Danach wurden Phosphorverbindungen (A.1) und (A.2) zugegeben. Die Temperatur stieg auf 62°C. Danach gab man die Kohlenstoffquellen (C.1) und (C.3) zu. Man rührte bei 70°C über einen Zeitraum von vierzehn Stunden nach (pH-Wert: 4,6). Man erhielt eine gelbe Suspension.

### Trocknung

Die Lösung aus Schritt (a.4) wurde mit 4 l Wasser verdünnt und danach in einem Sprühturm nach Programm unter Luft versprüht. Der Heißluftstrom hatte beim Eingang eine Temperatur von 305°C, beim Ausgang noch 121 °C.

Der Trockner wurde mit 450 kg/h Trocknungsgas betrieben sowie 33 kg/h Düsengas (Zerstäubungsgas) mit einem Zerstäubungsdruck von 3,5 bar.

Man erhielt ein gelbes gut rieselfähiges Pulver mit einer Restfeuchte von 8%. Es lag in Form von Partikeln vor, deren Durchmesser (D50) 6,3 µm und (D90) 19,4 µm war. SEM-Bilder zeigten sphärische Agglomerate des gelben Pulvers, die im Inneren durch den organischen Bestandteil Stärke/Laktose zusammengehalten wurden.

### Schritt (b.4)

60 g des wie vorstehend beschrieben erhaltenen gelben Pulvers wurden in einem 2-1-Quarzdrehkugelofen unter N₂-Atmosphäre thermisch behandelt. Die 2-1-Quarzdrehkugel drehte sich mit einer Geschwindigkeit von 10 Umdrehungen/min. Zunächst erhitzte man innerhalb von 60 Minuten auf 700°C. Dann kalzinierte man 60 Minuten bei 700°C. Danach ließ man auf Zimmertemperatur abkühlen. Man siebte (mesh 50 µm) und erhielt ein Elektrodenmaterial V-EM.4, welches schwarz aussah und pulverförmig mit bimodaler Partikelgrößenverteilung anfiel. BET: 9,1 m²/g. Die Stampfdichte der Siebfraktion <32µm betrug 1,01 g/ml.

### 1.5 Herstellung von Vergleichs-Elektrodenmaterial V-EM.5

In Schritt (a.5) setzte man die folgenden Ausgangsmaterialien ein:

| | |
|---|---|
| 4,53 kg | H₃PO₃ (A.1) |
| 6,31 kg | H₃PO₄ (A.2) |
| 4,74 g | LiOH · H₂O (B.1) |
| 1,92 kg | Polyvinylalkohol (C.4) |
| 12,53 kg | α-FeOOH (D2.1) |

Zuerst wurden 108 kg vollentsalztes Wasser in einem 200-Liter-Doppelmantelrührgefäß mit Ankerrührer vorgelegt und auf 47°C aufgeheizt. Anschließend wurde das LiOH · H₂O (B.1) darin gelöst und dann die Eisenverbindung (D2.1) zugegeben. Danach wurden Phosphorverbindungen (A.1) und (A.2) zugegeben. Die Temperatur stieg auf 63°C. Danach gab man die Kohlenstoffquelle (C.4) zu. Man rührte bei 70°C über einen Zeitraum von vierzehn Stunden nach (pH-Wert: 4,5). Man erhielt eine gelbe Suspension.

### Trocknung

Der pH-Wert der Lösung aus Schritt (a.5) wurde mit Ammoniakwasser auf 5,0 eingestellt. Danach wurde die so erhaltene Lösung in einem Sprühturm nach Programm unter Luft versprüht. Der Heißluftstrom hatte beim Eingang eine Temperatur von 305°C, beim Ausgang noch 121 °C. Der Trockner wurde mit 450 kg/h Trocknungsgas betrieben sowie 33 kg/h Düsengas (Zerstäubungsgas) mit einem Zerstäubungsdruck von 3,5 bar.

Man erhielt ein gelbes gut rieselfähiges Pulver mit einer Restfeuchte von 8%. Es lag in Form von Partikeln vor, deren Durchmesser (D50) 18,3 µm war. SEM-Bilder zeigten sphärische Agglomerate des gelben Pulvers, die im Inneren durch den organischen Bestandteil Polyvinylalkohol zusammengehalten wurden.

### Schritt (b.5)

60 g des wie vorstehend beschrieben erhaltenen gelben Pulvers wurden in einem 2-1-Quarzdrehkugelofen unter N₂-Atmosphäre thermisch behandelt. Die 2-1-Quarzdrehkugel drehte sich mit einer Geschwindigkeit von 10 Umdrehungen/min. Zunächst erhitzte man innerhalb von 60 Minuten auf 700°C. Dann kalzinierte man 60 Minuten bei 700°C. Danach ließ man auf Zimmertemperatur abkühlen. Man siebte (mesh 50 µm) und erhielt ein Elektrodenmaterial V-EM.5, welches schwarz aussah und pulverförmig anfiel. BET: 8,9 m²/g. Die Stampfdichte der Siebfraktion <32µm betrug 0,85 g/ml.

### 1.6 Herstellung von Vergleichs-Elektrodenmaterial V-EM.6

In Schritt (a.6) setzte man die folgenden Ausgangsmaterialien ein:

| | |
|---|---|
| 4,58 kg | H₃PO₃ (A.1) |
| 6,38 kg | H₃PO₄ (A.2) |
| 4,78 g | LiOH · H₂O (B.1) |

| | |
|---|---|
| 1,39 kg | Stearinsäure (C.5) |
| 9,81 kg | α-FeOOH (D2.1) |

Zuerst wurden 108 kg vollentsalztes Wasser in einem 200-Liter-Doppelmantelrührgefäß mit Ankerrührer vorgelegt und auf 47°C aufgeheizt. Anschließend wurde das LiOH · H₂O (B.1) darin gelöst und dann die Eisenverbindung (D2.1) zugegeben. Danach wurden Phosphorverbindungen (A.1) und (A.2) zugegeben. Die Temperatur stieg auf 56°C. Danach gab man die Kohlenstoffquelle (C.5) zu. Man rührte bei 70°C über einen Zeitraum von vierzehn Stunden nach (pH-Wert: 4,5). Man erhielt eine gelbe Suspension.

### Trocknung

Man verdünnte die Lösung aus Schritt (a.6) mit 8 l Wasser. Danach wurde der pH-Wert der so verdünnten Lösung aus Schritt (a.6) mit Ammoniakwasser auf 5,0 eingestellt. Danach wurde die so erhaltene Lösung in einem Sprühturm nach Programm unter Luft versprüht. Der Heißluftstrom hatte beim Eingang eine Temperatur von 305°C, beim Ausgang noch 121 °C. Der Trockner wurde mit 450 kg/h Trocknungsgas betrieben sowie 33 kg/h Düsengas (Zerstäubungsgas) mit einem Zerstäubungsdruck von 3,5 bar.

Man erhielt ein gelbes gut rieselfähiges Pulver mit einer Restfeuchte von 8%. Es lag in Form von Partikeln vor, deren Durchmesser (D50) 14 µm war. SEM-Bilder zeigten sphärische Agglomerate des gelben Pulvers, die im Inneren durch den organischen Bestandteil Stearinsäure zusammengehalten wurden.

### Schritt (b.6)

60 g des wie vorstehend beschrieben erhaltenen gelben Pulvers wurden in einem 2-1-Quarzdrehkugelofen unter N₂-Atmosphäre thermisch behandelt. Die 2-I-Quarzdrehkugel drehte sich mit einer Geschwindigkeit von 10 Umdrehungen/min. Zunächst erhitzte man innerhalb von 60 Minuten auf 700°C. Dann kalzinierte man 60 Minuten bei 700°C. Danach ließ man auf Zimmertemperatur abkühlen. Man siebte (mesh 50 µm) und erhielt ein Elektrodenmaterial V-EM.6, welches hellgrau aussah und pulverförmig anfiel. BET: 4,1 m²/g. Die Stampfdichte der Siebfraktion <32µm betrug 0,95 g/ml.

### 1.7 Herstellung von Vergleichs-Elektrodenmaterial V-EM.7

In Schritt (a.7) setzte man die folgenden Ausgangsmaterialien ein:

| | |
|---|---|
| 4,53 kg | H₃PO₃ (A.1) |
| 6,31 kg | H₃PO₄ (A.2) |
| 4,74 g | LiOH · H₂O (B.1) |
| 1,74 kg | Laktose (C.1) |
| 1,75 kg | Mannitol (C.2) |
| 9,71 kg | α-FeOOH (D2.1) |

Zuerst wurden 108 kg vollentsalztes Wasser in einem 200-Liter-Doppelmantelrührgefäß mit Ankerrührer vorgelegt und auf 43°C aufgeheizt. Anschließend wurde das LiOH · H₂O (B.1) darin gelöst und dann die Eisenverbindung (D2.1) zugegeben. Danach wurden Phosphorverbindungen (A.1) und (A.2) zugegeben. Die Temperatur stieg auf 56°C. Danach gab man die Kohlenstoffquellen (C.1) und (C.2) zu. Man rührte bei 70°C über einen Zeitraum von vierzehn Stunden nach (pH-Wert: 4,6). Man erhielt eine gelbe Suspension.

### Trocknung

Man verdünnte die Lösung aus Schritt (a.7) mit 8 l Wasser. Danach wurde die so erhaltene Lösung in einem Sprühturm nach Programm unter Luft versprüht. Der Heißluftstrom hatte beim Eingang eine Temperatur von 305°C, beim Ausgang noch 121 °C. Der Trockner wurde mit 450 kg/h Trocknungsgas betrieben sowie 33 kg/h Düsengas (Zerstäubungsgas) mit einem Zerstäubungsdruck von 3,5 bar.

Man erhielt ein gelbes gut rieselfähiges Pulver mit einer Restfeuchte von 8%. Es lag in Form von Partikeln vor, deren Durchmesser (D50) 15,8 µm war. SEM-Bilder zeigten sphärische Agglomerate des gelben Pulvers, die im Inneren durch den organischen Bestandteil Laktose/Mannitol zusammengehalten wurden.

### Schritt (b.7)

60 g des wie vorstehend beschrieben erhaltenen gelben Pulvers wurden in einem 2-1-Quarzdrehkugelofen unter N₂-Atmosphäre thermisch behandelt. Die 2-I-Quarzdrehkugel drehte sich mit einer Geschwindigkeit von 10 Umdrehungen/min. Zunächst erhitzte man innerhalb von 60 Minuten auf 700°C. Dann kalzinierte man 60 Minuten bei 700°C. Danach ließ man auf Zimmertemperatur abkühlen. Man siebte (mesh 50 µm) und erhielt ein Elektrodenmaterial V-EM.7, welches schwarz aussah und pulverförmig anfiel. BET: 11 m²/g. Die Stampfdichte der Siebfraktion <32µm betrug 1,11 g/ml.

### II. Herstellung von erfindungsgemäßen elektrochemischen Zellen

Erfindungsgemäßes Elektrodenmaterial wurde mit einem Bindemittel (iv.1): Copolymer von Vinylidenfluorid und Hexafluorpropen, als Pulver, kommerziell erhältlich als Kynar Flex® 2801 der Fa. Arkema, Inc., wie folgt verarbeitet.

Zur Bestimmung der elektrochemischen Daten der Elektrodenmaterialien wurden 8 g erfindungsgemäßes Elektrodenmaterial aus Schritt EM.1 und 1 g (iv.1) unter Zusatz von 1 g N-Methylpyrrolidon (NMP) sowie 1 g Ruß zu einer Paste vermischt. Man beschichtet eine 30 µm dicke Aluminiumfolie mit der vorstehend beschriebenen Paste (Aktivmaterialbeladung 4 mg/cm²). Nach Trocknung, aber ohne Kompression, bei 105°C wurden kreisförmige Teile der so beschichteten Aluminiumfolie (Durchmesser 20 mm) ausgestanzt. Aus den so erhältlichen Elektroden stellte man elektrochemische Zellen her.

Als Elektrolyt wurde eine 1 mol/l Lösung von LiPF₆ in Ethylencarbonat/Dimethylcarbonat (1:1 bezogen auf Massenanteile) eingesetzt. Die Anode der Testzellen bestand aus einer Lithiumfolie, die über einen Separator aus Glasfaserpapier zur Kathodenfolie in Kontakt steht.

Man erhält erfindungsgemäße elektrochemische Zellen EZ.1.

Wenn man erfindungsgemäße elektrochemische Zellen zwischen 3 V und 4 V bei 25°C mit verschiedenen Raten (0.1-6.5C, 1C = 160 mAh/g) zyklisierte (laden/entladen), so zeigte sich bei hohen Entladeraten (6.5C) eine Steigerung der Kapazität, siehe Tabelle 1.

**Tabelle 1: Entladegeschwindigkeiten bei hoher Kapazität**

| Beispiel | Entladegeschwindigkeit 0,1C | Entladegeschwindigkeit 0,2C | Entladegeschwindigkeit 6,5C |
|---|---|---|---|
| | Kapazität [mAh/g] | Kapazität [mAh/g] | Kapazität [mAh/g] |
| EM.1 | 147 | 146 | 101 |
| V-EM.2 | 147 | 144 | 89 |
| V-EM.3 | 138 | 137 | 81 |
| V-EM.4 | 139 | 137 | 80 |
| V-EM.5 | 149 | 140 | 26 |
| V-EM.6 | 143 | 137 | 58 |
| V-EM.7 | 144 | 141 | 74 |

## Patentansprüche

1. Verfahren zur Herstellung von Elektrodenmaterialien, **dadurch gekennzeichnet, dass** es die folgenden Schritte beinhaltet:
(a) man vermischt miteinander:
(A) mindestens eine Phosphorverbindung,
(B) mindestens eine Lithiumverbindung,
(C) mindestens eine Kohlenstoffquelle,
(D1) mindestens eine wasserlösliche Eisenverbindung, in der Fe in der Oxidationsstufe +2 oder +3 vorliegt,
(D2) mindestens eine Eisenquelle, die von (D1) verschieden und wasserunlöslich ist und in der Fe in der Oxidationsstufe null, +2 oder +3 vorliegt,
(b) man behandelt die erhaltene Mischung thermisch.

2. Verfahren nach Anspruch 1, **dadurch gekennzeichnet, dass** man in Schritt (a) in Gegenwart von Wasser vermischt.

3. Verfahren nach Anspruch 1 oder 2, **dadurch gekennzeichnet, dass** man die thermische Behandlung gemäß Schritt (b) bei 350 bis 1200°C durchführt.

4. Verfahren nach einem der Ansprüche 2 oder 3, dass man das in Schritt (a) eingesetzte Wasser ganz oder partiell entfernt.

5. Verfahren nach einem der Ansprüche 1 bis 4, **dadurch gekennzeichnet, dass** man mindestens zwei Phosphorverbindungen (A) einsetzt.

6. Verfahren nach einem der Ansprüche 1 bis 5, **dadurch gekennzeichnet, dass** man mindestens zwei Kohlenstoffquellen (C) einsetzt.

7. Verfahren nach einem der Ansprüche 1 bis 6, **dadurch gekennzeichnet, dass** man wasserlösliche Eisenverbindung (D1) wählt aus Ammoniumeisencitrat, Eisenacetat, FeSO₄, Eisencitrat, Eisenlactat und Eisenchlorid.

8. Verfahren nach einem der Ansprüche 1 bis 7, **dadurch gekennzeichnet, dass** man wasserunlösliche Eisenverbindung (D2) wählt aus Fe(OH)₃, FeOOH, Fe₂O₃, Fe₃O₄, Eisenphosphat, Eisenphosphonat und Eisencarbonat.

9. Elektrodenmaterialien in partikulärer Form, enthaltend Agglomerate von Primärpartikeln, wobei die Agglomerate enthalten
i.Primärpartikel von lithiiertem Eisenphosphat mit Olivinstruktur, wobei die Primärpartikel (i) einen mittleren Durchmesser (D50) im Bereich von 20 bis 250 nm aufweisen,
ii.Primärpartikel von lithiiertem Eisenphosphat mit Olivinstruktur, wobei die Primärpartikel (ii) einen mittleren Durchmesser (D50) im Bereich von 300 bis 1000 nm aufweisen,
iii.gegebenenfalls Kohlenstoff in elektrisch leitfähiger Modifikation.

10. Elektrodenmaterialien nach Anspruch 9, **dadurch gekennzeichnet, dass** Primärpartikel (i) und Primärpartikel (ii) in Agglomeraten in einem Volumenverhältnis (D50) im Bereich von 1:9 bis 1:1 vorliegen.

11. Elektrodenmaterialien nach Anspruch 9 oder 10, hergestellt nach einem Verfahren nach einem der Ansprüche 1 bis 8.

12. Verwendung von Elektrodenmaterialien nach einem der Ansprüche 9 bis 11 zur Herstellung von Elektroden von Lithium-Ionen-Batterien.

13. Lithium-Ionen-Batterien, enthaltend mindestens eine Elektrode, enthaltend mindestens ein Elektrodenmaterial nach einem der Ansprüche 9 bis 11.

14. Verwendung von Lithium-Ionen-Batterien nach Anspruch 13 in Akkubohrschraubern oder in Batterien zum Kaltstart von Fahrzeugen.
